# EUROPEAN PATENT SPECIFICATION

(11) **EP 0 202 012 B1**
(45) Date of publication and mention of the grant of the patent: **16.06.1993**
(21) Application number: 86302517.7
(22) Date of filing: 04.04.1986
(51) Int. Cl.: C08J 3/20, C08K 7/02

(54) **Process for the production of composite material based on a polymer matrix**
Verfahren zur Herstellung eines auf einer polymeren Matrix basierenden Verbundmaterials
Procédé pour la production d'un matériau composite basé sur une matrice polymère

(30) Priority: 05.04.1985 IT 2026285
(43) Date of publication of application: 20.11.1986
(73) Proprietor: AUSIMONT S.p.A., I-20121 Milano (IT)
(72) Inventor: Visca, Mario, I-15100 Alessandria (IT); Boero, Giancarlo, I-14100 Asti (IT); Lenti, Daria, I-15048 Valenza Alessandria (IT)
(74) Representative: Whalley, Kevin

(56) References cited:
- EP-A- 0 023 047
- GB-A- 954 938
- GB-A- 2 071 112

## Description

The present invention relates to a process for the production of a composite material based on a polymer matrix. More particularly, the invention relates to a process for the preparation of a composite material based on a polymer matrix comprising, homogeneously dispersed therein, an organic and/or inorganic filler (charge).

As is known, in many applications there are used materials comprising a polymer matrix in which are dispersed organic and/or inorganic fillers which impart to the composite material particular properties such as colour or mechanical resistance.

These composite materials in general are produced by mixing the organic and/or inorganic filler in the form of a powder with the polymer likewise in the form of a powder, usually in the presence of a dispersing medium, for example oil. This type of process requires that the polymer be processable on special machines, and that, moreover, the materials used as fillers possess specific dispersability characteristics.

In the case of thermoplastic polymers, there are required both high temperatures as well as a high quantity of energy for the mixing of the filler with the polymer in the molten state.

It is also known to produce composite materials by using a process comprising mixing with an aqueous dispersion of the polymer (latex) the filler in the form of a powder, and by then coagulating the resulting dispersion and then separating the coagulated composite material. Even if this process of mixing requires small quantities of energy, the composite material thus obtained does not exhibit a satisfactory homogeneity as required in certain applications.

Moreover, the addition of the organic and/or inorganic filler to the latex may lead to the coagulation of the polymer before complete homogenization is achieved.

GB-A-2071112 discloses a method of producing filler-containing PTFE powder, in which aqueous dispersions of PTFE particles and filler particles are mixed and coagulated. A substance containing a polyvalent cation is added to the mixture to ensure that the filler particles have a positive charge. A water-immiscible organic liquid is required to coagulate the particles.

The present invention aims to provide a process for the preparation of a composite material based on a polymer matrix having homogeneously dispersed therein an organic and/or inorganic filler, which process overcomes or at least mitigates the above described disadvantages.

More particularly, the invention aims to provide a composite material based on a polymer matrix, comprising dispersed therein an organic and/or inorganic filler, having a high grade of uniformity, prepared by a quite simple process and with the use of only small quantities of energy.

It has now been surprisingly found that these aims may be achieved if the following conditions are satisfied:
a) the polymer matrix and the organic and/or inorganic filler be mixed together in the form of aqueous dispersions;
b) the particles of the dispersed systems have a high degree of dispersion and exhibit a comparable stability.

According to the present invention, such conditions are satisfied by a process for the production of a composite material based on a polymer matrix, comprising homogeneously dispersed therein an organic and/or inorganic filler, the said process comprising mixing together the single components in the form of aqueous dispersions in which the particles have a surface charge of the same sign and a zeta potential (in absolute value) of from 10 mV to 100 mV and the ratio (in absolute value) between the zeta potentials of the particles of each dispersion is from 0.2 to 5, and then by coagulating the mixed dispersion thus obtained.

It is preferred that the zeta potential (in absolute value) of the particles of each dispersion is from 15 to 70 mV and that the ratio (in absolute value) between the zeta potentials is from 0,5 to 2, in the process of the present invention.

In the preparation of the composite material, any polymer matrix can be used, but the matrix is preferably in the form of a latex, more preferably a matrix obtained by emulsion polymerization.

Examples of polymers that may be used in the process of the present invention are: fluorinated polymers and elastomers such as polytetrafluoroethylene; copolymers of vinylidene fluoride and hexafluoropropylene: terpolymers of vinylidene fluoride, hexafluoropropylene and tetrafluoroethylene; terpolymers of vinylidene fluoride, tetrafluoroethylene and perfluoroalkyl-vinyl-ethers; copolymers of tetrafluoroethylene and perfluoroalkyl-vinyl-ethers; copolymers of tetrafluoroethylene and propylene; copolymers of vinylidene fluoride and chloro-trifluoro-ethylene; copolymers of vinylidene fluoride and hydropentafluoropropylene; terpolymers of vinylidene fluoride, hydropentafluoropropylene and tetrafluoroethylene, and the corresponding products having in the chain small quantities of trifluoro-bromo-ethylene; chlorinated (co)polymers such as polyvinylchloride and polyvinylidenechloride; polymers and copolymers such as polyacrylonitrile; polymethacrylates and polymethylmethacrylates; polybutadiene and polyisoprene; polycarbonates; acrylonitrile-butadiene-styrene polymers, known as ABS resins; vinyl (co)polymers such as polyvinylacetate, ethylene-vinylacetate (EVA) copolymers, and polyvinyl-alcohol (PVA): and in general any polymer and copolymer obtained by an emulsion polymerization process.

Examples of inorganic fillers that may be used in the preparation of the composite material are: pigments. graphite, bronze in powder form, ground glass in the form of spheres or fibres, molybdenum sulphide, silica, steel powder, metal oxides, carbonates, and silicates.

Examples of organic fillers that can be used are organic pigments, stabilizers, and any polymer or resin different from that which forms the polymer matrix.

According to the present invention, composite materials in which the filler (or charge) is homogeneously dispersed in the matrix, are obtained if the single components are mixed together starting from preformed dispersions in which the particles are completely wetted by the dispersing medium and have a surface charge of the same sign and comparable stabilities. By the term stability there is meant the capacity of the particles to remain in the dispersed state.

The stability of a dispersed system may be measured by the zeta potential, defined as the electric potential at the particle-solution plane of slippage. The zeta potential of particles in a dispersion may be determined by an electrokinetic means, such as electrophoresis, electro-osmosis, or potential/current flow, as described for example in "Colloid Science", vol. 1, by H.R. Kruyt, published by Elsevier Publishing Co., of 1952.

The adjusting of the zeta potential value of the components of each dispersion may be carried out by acting on the mechanisms which control the formation of the surface charge. A suitable method for varying the zeta potential is that of varying the pH of the dispersion or otherwise by adding surfactants, polyelectrolytes or ions specifically adsorbed, such as sodium laurylsulphate, ammonium perfluoro-octanoate, sodium polyacrylate, sodium hexametaphosphate, or sodium phosphate.

After the mixing of the dispersions of the single components, the resulting dispersion is coagulated. The coagulation phase is preferably carried out in a fast way in order to avoid the selective coagulation of the single components of the dispersion, with a consequential dishomogeneity of the coagulate.

Any technique for coagulating the dispersion may be used, such as vigorous stirring, the addition of electrolytes or the addition of a liquid in which the dispersions are not stable, or a combination of said techniques.

The preferred method in the process of the present invention is the addition of electrolytes such as sulphuric acid, magnesium nitrate, or aluminium sulphate, at a concentration at least sufficient to coagulate the dispersion, combined, if necessary, with a vigorous stirring.

The separation of the coagulate from the dispersing medium may be obtained by using conventional techniques such as floatation, filtration, centrifugation, decantation or a combination of said techniques.

The use of the various separation techniques depends on the polymeric matrix used. More particularly, when the polymer phase is polytetrafluoroethylene, a preferred method may be the floatation of the coagulate by using vigorous stirring, while for composite materials based on polyvinylchloride or on tetrafluoroethylene-vinylidene fluoride copolymer, it is advisable to effect the separation by filtration.

In order to avoid possible adverse effects due to the presence of electrolytes in the coagulate, after the separation there may be carried out one or more washings of the coagulate.

The composite material thus obtained according to the process of the invention, under examination by a microscope, is found to be substantially perfectly uniform.

The invention will be further described with reference to the following illustrative Examples. In the Examples, all parts and percentages are by weight, unless otherwise stated.

### Example 1

A dispersion of a red pigment based on iron oxide (Bayer 110M) was prepared in distilled water, at a concentration of 10 g/l, by means of ultrasounds. The particles of dispersed pigment showed a zeta potential equal to -25 mV.

Thereupon, 20 ml of the dispersion were added, under mild stirring (50 r.p.m.) to a polytetrafluoroethylene latex (PTFE) containing 40 g of polymer; the thus obtained dispersion was then diluted with distilled water until there was obtained a concentration of the PTFE equal to 100 g/l. In the latex the PTFE particles showed a zeta potential of -30 mV, measured by microelectrophoresis.

To this mixed dispersion thus obtained there were added 10 ml of H₂SO₄ (30% by weight), while the stirring was rapidly increased to 700 r.p.m. The dispersion coagulated completely in a time less than 5 minutes. The stirring was maintained for another 10 minutes in order to float the coagulate.

The powder, separated from the liquid by filtration on a nylon net, was then dried for 12 hours at 140°C. A thin ribbon prepared with the pigmented product exhibited a perfectly uniform colour, mechanical and dielectric properties similar to those of a non-pigmented ribbon, and the absence of pigment coagulates under microscopic analysis.

### Example 2

A pigment based on cadmium sulphoselenide (CP 2400, Ferro Co.. USA) was dispersed, at a concentration of 10 g/l, in an aqueous solution containing 1 g/l of sodium hexametaphosphate, by using a ball mill of the "Red Devil" type. The pigment particles had a zeta potential of -46 mV, measured by electro-osmosis.

20 ml of the dispersion were then added, under mild stirring (50 r.p.m.), to a PTFE latex containing 40 g of polymer; the dispersion was thereupon diluted with distilled water to a concentration of 100 g/l. In the latex the PTFE particles showed a zeta potential of -30 mV, measured by electrophoresis.

To the mixed dispersion were then rapidly added, under constant stirring, 20 ml of a Mg(NO₃)₂ 1 M solution, thereby causing bulk coagulation of the particles. The coagulate was then separated by floating, increasing the stirring to 700 r.p.m.

The powder had a uniform colour and was dried at 140°C for 12 hours. A ribbon prepared with the pigmented powder exhibited a uniform colour, dielectric and mechanical properties similar to those of a non-pigmented ribbon, and the absence of pigment coagulates under microscopic analysis.

### Example 3

A sample of graphite (FOLIAC X6236) was dispersed at a concentration of 10 g/l, in an aqueous solution containing 1 g/l of sodium polyacrylate, by using a "Red Devil" ball mill. 60 ml of the dispersion were thereupon added to 120 ml of a PTFE latex containing 40 g of polymer. The zeta potential of the graphite particles, measured by electro-osmosis, was -15 mV, while the zeta potential of the PTFE, measured by electrophoresis, was -30 mV.

The dispersion thus obtained was then diluted, under mild stirring (50 r.p.m.), to a volume of 400 ml. Still under mild stirring, there were then added 20 ml of a Mg(NO₃)₂ 1 M solution, causing complete coagulation of the slurry. The thus coagulated polymer was then floated under stirring at about 700 r.p.m.

The obtained powder, dried at 140°C for 12 hours, was seen to be perfectly uniform under microscopic analysis. A thin ribbon prepared with the dried powder had a uniform colour.

### Example 4

40 ml of a slurry, obtained by dispersing 25 g of glass fibre in 100 ml of an aqueous solution containing 1 g/l of sodium hexametaphosphate, were added to 120 ml of a PTFE latex containing 40 g of the polymer. The zeta potential of the glass fibre, measured by electro-osmosis, was -51 mV, while the zeta potential of the PTFE, measured by electrophoresis, was -30 mV.

The obtained slurry, diluted to a volume of 400 ml, was then additioned with 20 ml of a Mg(NO₃)₂ 1 M solution, under a mild stirring (100 r.p.m.). The addition of the electrolyte caused complete coagulation of the dispersion. The coagulate was thereupon floated, under vigorous stirring (700 r.p.m.), for a period of 15 minutes.

The powder thus obtained, dried for 12 hours at 140°C, under microscopic analysis, was showed to be formed of glass fibres singularly dispersed in the polymer matrix.

### Example 5

A PTFE latex was added, in an amount of 10% by weight, to a latex made of a Tecnoflon fluoroelastomer (Tecnoflon is a registered trade mark). The zeta potential of the PTFE latex was -30 mV, while the zeta potential of the fluoroelastomer was -50 mV, both measured by electrophoresis.

Then 200 ml of the mixed latex were slowly added to an equal volume of an aqueous solution containing 8 g/l of Al₂(SO₄)₃, maintained under vigorous stirring (500 r.p.m.). The slurry coagulated instantly.

The coagulate, after separation by filtration and drying for 12 hours at 60°C, appeared under microscopic analysis to be perfectly uniform.

### Example 6

A PTFE latex, containing 40 g of polymer, was additioned with a dispersion of red pigment CP2400 (by Ferro Co., USA) and a TiO₂ dispersion. The total of added pigments was equal to 3.5% on the PTFE. The zeta potentials of the particles were:
- for the PTFE = -30 mV
- for the red pigment = -46 mV
- for the TiO₂ pigment = -40 mV.

There were prepared various dispersions, with ratios by weight of red pigment/TiO₂ pigment of: 10:1, 2.5:1, 1:1, 1:2.5, 1:5, 1:10 and 1:20.

The dispersions were coagulated as described in Example 2. The powders, dried for 12 hours at 140°C, were uniformly coloured. The colour of tablets, obtained by sintering of the powders at 400°C, ranged uniformly from red to pink as the red pigment/TiO₂ pigment ratio decreased.

### Example 7

66.7 ml of a polyvinylchloride latex (at a 300 g/l concentration) and 10 ml of a dispersion of a yellow F 897 pigment (Ferro Co.. USA) at a concentration of 10 g/l were mixed with an aqueous solution containing 0.1 g/l of sodium hexametaphosphate and 83.4 ml of distilled water.
The zeta potentials of the particles, measured by electrophoresis, were:

| | |
|---|---|
| - for the polyvinyl chloride | -35 mV, |
| - for the pigment | -25 mV. |

Thereupon, under a mild stirring, there were admixed 20 ml of a 1 M solution of Mg(NO₃)₂, thereby causing complete coagulation of the slurry.

The coloured coagulate was then separated by filtration and dried for 48 hours at 50°C. The resulting powder was uniformly coloured.

## Claims

1. A process for the production of a composite material based on a polymer matrix comprising, homogeneously dispersed therein, an organic and/or an inorganic filler, the said process comprising mixing together the single components in an aqueous phase, and then coagulating the aqueous composite dispersion thus obtained, characterized in that the single components are in the form of aqueous dispersions in which the particles have a surface charge of the same sign and a zeta potential (in absolute value) of from 10 to 100 mV, and in that the ratio (in absolute value) between the zeta potentials of the particles of each dispersion is from 0.2 to 5.

2. A process as claimed in claim 1, characterized in that the zeta potential (in absolute value) of the particles of each dispersion is from 15 to 70 mV.

3. A process as claimed in claim 1 or 2, characterized in that the ratio (in absolute value) between the zeta potentials of the particles of each dispersion is from 0.5 to 2.

4. A process as claimed in any of claims 1 to 3, characterized in that the polymer matrix is in the form of a latex.

5. A process as claimed in claim 4, characterized in that the polymer matrix is obtained by emulsion polymerization.

6. A process as claimed in any of claims 1 to 5, characterized in that the zeta potential of each component is modified either by varying the pH or by the addition of surfactant, polyelectrolyte or specifically adsorbed ions.

7. A process as claimed in any of claims 1 to 6, characterized in that the coagulation phase is conducted in a fast way, so as to avoid selective coagulation of the single components of the dispersion.

8. A process as claimed in any of claims 1 to 7, characterized in that the coagulation phase is obtained by the addition of an electrolyte, optionally combined with stirring.

9. A composite material obtainable by the process of any of claims 1 to 8, consisting of a fluoroelastomer matrix containing polytetrafluoroethylene particles homogeneously dispersed therein, wherein the fluoroelastomer is a copolymer of vinylidene fluoride, hexafluoropropylene and optionally tetrafluoroethylene.

## Patentansprüche

1. Verfahren zur Herstellung eines auf einer polymeren Matrix basierenden Verbundmaterials, das ein darin homogen dispergiertes organisches und/oder anorganisches Füllmittel umfaßt, wobei das genannte Verfahren das Vermischen der einzelnen Komponenten in einer wässrigen Phase mit nachfolgendem Koagulieren der so erhaltenen wässrigen Dispersion des Verbundmaterials umfaßt, dadurch gekennzeichnet, daß die einzelnen Komponenten in Form einer wässrigen Dispersion vorliegen, worin die Teilchen eine Oberflächenladung gleicher Art und ein Zeta-Potential (als absoluter Wert) von 10 bis 100 mV aufweisen, und wobei das Verhältnis (als absoluter Wert) zwischen den Zeta-Potentialen der Teilchen jeder Dispersion von 0,2 - 5 beträgt.

2. Verfahren nach Anspruch 1, dadurch gekennzeichnet, daß das Zeta-Potential (als absoluter Wert) der Teilchen jeder Dispersion von 15 bis 70 mV beträgt.

3. Verfahren nach Anspruch 1 oder 2, dadurch gekennzeichnet, daß das Verhältnis (als absoluter Wert) zwischen den Zeta-Potentialen der Teilchen jeder Dispersion von 0,5 bis 2 beträgt.

4. Verfahren nach einem der Ansprüche 1 bis 3, dadurch gekennzeichnet, daß die polymere Matrix in Form eines Latex vorliegt.

5. Verfahren nach Anspruch 4, dadurch gekennzeichnet, daß die polymere Matrix durch Emulsionspolymerisation erhalten worden ist.

6. Verfahren nach einem der Ansprüche 1 bis 5, dadurch gekennzeichnet, daß das Zeta-Potential jeder Komponente entweder durch Variieren des pH-Wertes oder durch Zugabe einer oberflächenwirksamen Substanz, eines Polyelektrolyten oder spezifisch adsorbierter Ionen modifiziert wird.

7. Verfahren nach einem der Ansprüche 1 bis 6, dadurch gekennzeichnet, daß die Koagulationsphase in rascher Weise durchgeführt wird, so daß selektive Koagulation der einzelnen Komponenten der Dispersion vermieden wird.

8. Verfahren nach einem der Ansprüche 1 bis 7, dadurch gekennzeichnet, daß die Koagulationsphase durch Zugabe eines Elektrolyten, gegebenenfalls unter Rühren, erhalten wird.

9. Verbundmaterial, das man nach dem Verfahren einer der Ansprüche 1 bis 8 erhält, bestehend aus einer Fluorelastomer-Matrix, die darin homogen dispergiert Polytetrafluorethylen-Teilchen enthält, und worin das Fluorelastomer ein Copolymer von Vinylidenfluorid, Hexafluorpropylen und gegebenenfalls Tetrafluorethylen ist.

## Revendications

1. Un procédé pour la production d'un matériau composite basé sur une matrice de polymère dans laquelle sont dispersés de façon homogène une charge organique et/ou une charge inorganique, ce procédé comprenant le mélange des différents composants en phase aqueuse et ensuite la coagulation de la dispersion composite aqueuse ainsi obtenue, caractérisé en ce que les différents composants sont sous forme de dispersions aqueuses dans lesquelles les particules ont une charge de surface du même signe et un potentiel zêta (en valeur absolue) de 10 à 100 mV, et en ce que le rapport (en valeur absolue) entre les potentiels zêta des particules de chaque dispersion est de 0,2 à 5.

2. Un procédé suivant la revendication 1, caractérisé en ce que le potentiel zêta (en valeur absolue) des particules de chaque dispersion est de 15 à 70 mV.

3. Un procédé suivant les revendications 1 ou 2, caractérisé en ce que le rapport (en valeur absolue) entre les potentiels zêta des particules de chaque dispersion est de 0,5 à 2.

4. Un procédé suivant l'une quelconque des revendications 1 à 3, caractérisé en ce que la matrice de polymère est sous la forme d'un latex.

5. Un procédé suivant la revendication 4, caractérisé en ce que la matrice de polymère est obtenue par polymérisation en émulsion.

6. Un procédé suivant l'une quelconque des revendications 1 à 5, caractérisé en ce que le potentiel zêta de chaque composant est modifié soit par variation du pH, soit par addition d'un tensioactif, d'un polyélectrolyte ou d'ions adsorbés spécifiquement.

7. Un procédé suivant l'une quelconque des revendications 1 à 6, caractérisé en ce que la phase de coagulation est conduite de façon rapide pour éviter une coagulation sélective des composants de la dispersion.

8. Un procédé suivant l'une quelconque des revendications 1 à 7, caractérisé en ce que la phase de coagulation est obtenue par addition d'un électrolyte, éventuellement associé à une agitation.

9. Un matériau composite pouvant être obtenu par le procédé suivant l'une quelconque des revendications 1 à 8, consistant en une matrice de fluoroélastomère dans laquelle sont dispersées de façon homogène des particules de polytétrafluoroéthylène, le fluoroélastomère consistant en un copolymère de fluorure de vinylidène, d'hexafluoropropylène et éventuellement de tétrafluoroéthylène.
